# EUROPEAN PATENT APPLICATION

(11) **EP 4 206 018 A1**
(43) Date of publication of application: **05.07.2023**
(21) Application number: 21218376.8
(22) Date of filing: 30.12.2021
(51) Int. Cl.: B60K 16/00, B60K 25/08

(54) **UTILITY VEHICLE AXLE AND UTILITY VEHICLE COMPRISING AT LEAST ONE UTILITY VEHICLE AXLE**

(71) Applicant: Schmitz Cargobull AG, 48341 Altenberge (DE)
(72) Inventor: FÖRSTER, Marvin, 48161 Münster (DE); QUECKENSTEDT, Birger, 46325 Borken (DE); CHILD, Craig, Skipton, BD20 7EU (GB); WRIGHTSON, Peter, Blackburn, Lancashire BB2 7DT (GB)
(74) Representative: Cohausz & Florack

(57) **Abstract**

The invention relates to a utility vehicle axle (10) for a utility vehicle (U), in particular a truck, trailer or semitrailer. In order to provide electrical energy in an environmentally friendly manner independently of a vehicle engine, the utility vehicle axle (10) comprises at least one wheel fastening element (16) for fastening at least one wheel (11) of the utility vehicle (U) to the utility vehicle axle (10) and a generator coupling element (20) for connecting to a generator (15) and driving the generator (15), wherein the wheel fastening element (16) is rotatable about a wheel rotation axis (AW), wherein the generator coupling element (20) is rotatable about a generator rotation axis (AG) and wherein the wheel fastening element (16), for driving the generator coupling element (20), is connected to the generator coupling element (20) via a gear unit (19) for converting the rotational speed of the wheel fastening element (16) into a higher rotational speed of the generator coupling element (20).

## Description

The invention relates to a utility vehicle axle for a utility vehicle, in particular a truck, trailer or semitrailer. Furthermore, the invention relates to a utility vehicle, in particular truck, trailer or semitrailer, comprising at least one utility vehicle axle.

Utility vehicles are known in various designs, for example in the form of trucks, trailers or semitrailers. Regardless of their design, utility vehicles are intended in particular for transporting goods, i.e. the cargo to be transported, predominantly on public roads. For this purpose, the known utility vehicles comprise different types of bodies that delimit a loading space which serves to receive the cargo to be transported.

For example, so-called tarpaulin bodies are known in which the side walls and the roof are closed by at least one tarpaulin. The front wall of tarpaulin bodies is usually designed as a solid wall, whereas the rear wall is regularly formed by two wing doors in order to be able to load the loading space from the rear as needed. If the at least one tarpaulin can be moved along the side wall, it is also referred to as so-called curtainsi d ers.

Besides tarpaulin bodies, so-called box bodies are known. As with tarpaulin bodies, the front wall of box bodies is usually designed as a solid wall and the rear wall of box bodies is regularly formed by two wing doors. In contrast to tarpaulin bodies, however, the side walls and the roof of box bodies are closed by solid walls. The side walls, the roof and the front wall as well as, if needed, the floor of box bodies are usually formed by panels comprising outer structuring cover layers and, in between, a core layer of foamed plastic. Since box bodies are closed, they are particularly suitable for the transport of moisture-sensitive and/or temperature-sensitive goods, thus for example for so-called dry transport and/or temperature-controlled transport. In addition, a transport refrigeration unit is often provided, by means of which the loading space can be actively cooled and/or heated and, thus, tempered to a predetermined temperature.

Regardless of the type of the body, utility vehicles typically comprise at least one utility vehicle axle via which the utility vehicle body is connected to wheels for moving the utility vehicle. To fasten the wheels to the utility vehicle axle, the utility vehicle axle usually comprises a wheel fastening element at each of the utility vehicle axle's opposite longitudinal ends. The wheel fastening elements are typically held rotatably on the utility vehicle axle so that the wheels fastened to the wheel fastening elements can roll.

In addition, modern utility vehicles often comprise a large number of electrical components that have to be supplied with electrical energy during operation. For example, the transport refrigeration unit can be operated electrically and/or a telematics device for communication with a center remote from the utility vehicle can be provided, which is to be supplied with electrical energy. There is a need to supply electrical components of the utility vehicle with electrical energy in an environmentally friendly manner and independently of the vehicle engine providing the drive power for moving the utility vehicle.

Against this background, the problem underlying the present invention is to configure and further develop the utility vehicle axle and the utility vehicle each of the type mentioned at the beginning and described in more detail above in such a way that electrical energy can be provided in an environmentally friendly manner independently of a vehicle engine.

This problem is solved according to claim 1 by a utility vehicle axle for a utility vehicle, in particular a truck, trailer or semitrailer, comprising at least one wheel fastening element for fastening at least one wheel of the utility vehicle to the utility vehicle axle and a generator coupling element for connecting to a generator and driving the generator, wherein the wheel fastening element is rotatable about a wheel rotation axis, wherein the generator coupling element is rotatable about a generator rotation axis and wherein the wheel fastening element, for driving the generator coupling element, is connected to the generator coupling element via a gear unit for converting the rotational speed of the wheel fastening element into a higher rotational speed of the generator coupling element.

Said problem is further solved with a utility vehicle according to the preamble of claim 15 in that the utility vehicle axle is designed according to any one of claims 1 to 14.

For the sake of a better understanding and to avoid unnecessary repetition, the utility vehicle axle and the utility vehicle are described together below without distinguishing in each case in detail between the utility vehicle axle and the utility vehicle. However, for the person skilled in the art, it is nevertheless clear from the context which feature in each case is relevant with regard to the utility vehicle axle and/or the utility vehicle.

The utility vehicle axle thus comprises the at least one wheel fastening element, which is rotatable about the wheel rotation axis. At least one wheel of the utility vehicle can be fastened to the wheel fastening element, in particular in a rotationally fixed manner, for example by means of one or more screw connections and/or via a wheel flange. The wheel can expediently serve to move the utility vehicle. Regardless of this, the wheel fastening element can expediently comprise one or more fastening means for fastening the wheel, for example in the form of bores.

In addition, the utility vehicle axle comprises the generator coupling element, which is rotatable about the generator rotation axis. The generator coupling element can be connected to a generator such that the generator coupling element can drive the generator. Then, the generator can expediently be configured to provide electrical energy as a result of being driven by the generator coupling element.

The generator coupling element is connected to the wheel fastening element, so that the wheel fastening element can drive the generator coupling element. In this way, the generator connected to the generator coupling element can be driven by the rotary motion of the wheel fastened to the wheel fastening element while the utility vehicle is moving. Thus, electrical energy for supplying electrical components of the utility vehicle can be provided independently of the vehicle engine in an environmentally friendly manner. An additional advantage is that, during braking operations of the utility vehicle, the rotational energy of the wheel can be recuperated and provided as electrical energy.

Finally, the utility vehicle axle comprises the gear unit, via which the wheel fastening element is connected to the generator coupling element. The gear unit is configured to convert the rotational speed of the wheel fastening element into a higher rotational speed of the generator coupling element. In this way, despite the typically relatively low rotational speeds of the wheel fastening element in utility vehicles, it is made possible that the generator provides a high electrical power with a small construction size. In this context, the rotational speed of the wheel fastening element in particular refers to the rotational speed at which the wheel fastening element rotates about the wheel rotation axis and/or the rotational speed of the generator coupling element in particular refers to the rotational speed at which the generator coupling element rotates about the generator rotation axis.

In principle, the utility vehicle can expediently be a truck. However, the aforementioned advantages particularly take effect if the utility vehicle is a trailer or semitrailer. This is because, then, the electrical devices of the trailer or semitrailer can be provided with electrical energy without an electrical connection to the tractor pulling the trailer or semitrailer. This can be particularly simple and cost-effective.

According to a preferred embodiment of the utility vehicle axle, the gear unit comprises an epicyclic gear. The epicyclic gear can be configured to convert an input rotational speed assigned to the wheel fastening element into a higher output rotational speed assigned to the generator coupling element. Epicyclic gears have the advantage that, with a compact construction, they allow for high rotational speed differences between input and output as well as conversion of high torques, as typically occurring in the area of utility vehicle wheels. Against this background, it can be particularly advantageous if the input rotational speed of the epicyclic gear is the rotational speed of the wheel fastening element. Then, preferably, no further rotational speed conversion is provided between the epicyclic gear and the wheel fastening element. Regardless of this, an epicyclic gear, preferably, is understood to mean a gear comprising at least one set of a hollow wheel, a sun wheel arranged centrally of the hollow wheel, a plurality of planetary wheels arranged distributed around the sun wheel and each meshing with the sun wheel and with the hollow wheel, and a planet carrier carrying the planetary wheels.

It can contribute to a cost-effective and compact design of the epicyclic gear if the epicyclic gear is single-stage. Then, the epicyclic gear can comprise only one set of a hollow wheel, a sun wheel, a plurality of planetary wheels and a planet carrier. As an alternative or in addition to a single-stage design, the epicyclic gear can be straight-toothed. Then, the meshing toothings of the sun wheel, the planetary wheels and the hollow wheel can be straight-toothed. This has also a positive effect on the manufacturing costs of the epicyclic gear and, moreover, can contribute to a simplified mounting of the epicyclic gear, since straight toothings do not cause axial forces. In this context, a straight toothing is particularly understood to mean a toothing whose teeth extend at least substantially parallel to the rotation axis of the related toothed wheel. Irrespective of the design of the toothing, the epicyclic gear can comprise at least three planetary wheels. This can contribute to reliable torque transmission and long service life. Alternatively or additionally, with regard to a cost-effective design of the epicyclic gear, it can be advantageous if the epicyclic gear comprises at most five planetary wheels. For the same reason, it can be particularly advantageous if the epicyclic gear comprises at most four, preferably at most three, planetary wheels.

In order to effect a significant increase in the rotational speed of the generator coupling element compared to the rotational speed of the wheel fastening element, it can be advantageous if the gear ratio of the epicyclic gear of input rotational speed to output rotational speed is at most 0.6. Against the same background, it can be even more preferred if the respective gear ratio is at most 0.4, preferably at most 0.2. Regardless of a respective upper limit, it can also be advantageous if the gear ratio of the epicyclic gear of input rotational speed to output rotational speed is at least 0.05. This can contribute to a compact design of the epicyclic gear. A particularly compact design is possible if the respective gear ratio is at least 0.1, preferably at least 0.15. Quite generally, the indicated values for the gear ratio preferably apply independently of the ratio of the rotational directions.

With regard to a simple and compact construction of the gear unit, it can be advantageous if a planet carrier of the epicyclic gear forms the input side or the output side of the epicyclic gear. Alternatively or additionally, for the same reason, it can also be advantageous if a sun wheel of the epicyclic gear forms the output side or the input side of the epicyclic gear. A particularly simple and compact construction of the gear unit can be achieved if the planet carrier forms the input side of the epicyclic gear and/or the sun wheel forms the output side of the epicyclic gear. Irrespective of this and quite generally, the input side of the epicyclic gear can in particular be assigned to the wheel fastening element, thus preferably be connected to the wheel fastening element independently of the other components of the epicyclic gear. Accordingly, the output side of the epicyclic gear can be assigned in particular to the generator coupling element, thus preferably be connected to the generator coupling element independently of the other components of the epicyclic gear.

Regardless of whether the planet carrier and/or the sun wheel form the input side and/or the output side of the epicyclic gear, it can be advantageous if a hollow wheel of the epicyclic gear is fixed in circumferential direction. This can also contribute to a simple and compact construction of the gear unit. Then, the hollow wheel can be stationary. Irrespective of this, the fixing of the hollow wheel in circumferential direction can be effected simply and reliably by a form fit. Alternatively or additionally, the hollow wheel can be fixed in circumferential direction in a constructively simple manner to a hollow wheel carrier, which carries at least the substantial part of the weight force of the hollow wheel.

Reliable fixing of the hollow wheel even in case of high forces and torques to be transmitted, as typically occur with utility vehicles, can be achieved if the form fit between the hollow wheel and the hollow wheel carrier in circumferential direction is provided by meshing fixing toothings of the hollow wheel and the hollow wheel carrier. Then, the fixing toothing of the hollow wheel can be in mesh with the fixing toothing of the hollow wheel carrier. Irrespective of this, it can be advantageous in terms of reliable force transmission if the fixing toothing of the hollow wheel and/or of the hollow wheel carrier is circumferential. Alternatively or additionally, it can contribute to a simple construction if one of the fixing toothings is designed as an internal toothing and the other fixing toothing is designed as an external toothing. In this context, a particularly simple construction can be enabled if the fixing toothing of the hollow wheel is designed as an internal toothing and the fixing toothing of the hollow wheel carrier is designed as an external toothing.

As an alternative or in addition to an epicyclic gear, the gear unit can comprise a spur gear. Then, the spur gear can convert an input rotational speed assigned to the wheel fastening element into an output rotational speed assigned to the generator coupling element. By means of a spur gear, an offset between the wheel rotation axis and the generator rotation axis can be achieved simply and cost-efficiently, which can be advantageous with regard to a simple connection of the generator to the generator coupling element. The spur gear can expediently comprise at least two spur wheels each meshing with at least one other spur wheel of the spur gear, wherein a spur wheel in particular refers to a toothed wheel with circumferential toothing.

The spur gear can be configured to convert the input rotational speed into a higher output rotational speed. In this way, the spur gear can contribute in a simple manner to the conversion of the rotational speed of the wheel fastening element into the higher rotational speed of the generator coupling element. Against this background, it can be particularly advantageous if the gear ratio of the spur gear of input rotational speed to output rotational speed is at most 0.8, preferably at most 0.6, in particular at most 0.45. In order to alternatively or additionally allow for a compact design of the spur gear and, consequently, of the gear unit, it can be advantageous if the respective gear ratio is at least 0.1, preferably at least 0.25, in particular at least 0.35. The indicated values preferably apply independently of the rotational directions.

Regardless of the gear ratio of the spur gear, it can be advantageous in terms of simple construction and low-cost design if the spur gear is single-stage. Then, the spur gear can preferably comprise only one pair of two spur wheels meshing with each other. As an alternative or in addition to a single-stage design, the spur gear can be helical-toothed. In this case, in particular, the meshing toothings of the spur wheels can be designed as helical toothings. Helical toothings can be advantageous in terms of smooth running and low noise emissions. A helical toothing is in particular understood to mean a toothing whose teeth extend obliquely to the rotation axis of the related spur wheel.

If both the epicyclic gear and the spur gear are provided, the wheel fastening element can be connected to the spur gear via the epicyclic gear, so that, preferably, the wheel fastening element can drive the spur gear via the epicyclic gear. This can have a positive effect on a compact design as well as simple and thus cost-effective manufacture of the gear unit. For the same reason, it can be alternatively or additionally advantageous if the epicyclic gear is connected to the generator coupling element via the spur gear, so that, preferably, the rotary motion can be transmitted from the epicyclic gear via the spur gear to the generator coupling element.

With regard to a compact and at the same time cost-effective design of the gear unit, it can alternatively or additionally be advantageous if the wheel fastening element is connected to the input side of the epicyclic gear in an at least substantially rotationally fixed manner. Then, preferably, no further rotational speed conversion is provided between the wheel fastening element and the epicyclic gear. Irrespective of this, the wheel fastening element can, for the sake of simplicity, be connected to the input side of the epicyclic gear via an axle shaft, so that, preferably, the rotary motion of the wheel fastening element can be transmitted to the epicyclic gear via the axle shaft.

The axle shaft can be connected to the wheel fastening element in a materially bonded manner. In this way, reliable torque transmission and a long service life can be ensured even with high torques to be transmitted, as typically occur in the area of utility vehicle wheels. This applies all the more if the connection between the wheel fastening element and the axle shaft is a welded connection. The welded connection can then be produced by friction welding, which can be particularly advantageous in terms of fatigue strength.

Regardless of how the axle shaft is connected to the wheel fastening element, the axle shaft can be connected to the input side of the epicyclic gear in a form-fitting manner in circumferential direction. This allows for a connection that is easy to join, which can significantly simplify the manufacture of the utility vehicle axle. In addition, a form-fitting connection permits reliable transmission of high torques. Against this background, it can be particularly advantageous if the form fit is provided by meshing coupling toothings of the axle shaft and the input side of the epicyclic gear. Then, the coupling toothing of the axle shaft and the coupling toothing of the input side of the epicyclic gear can be in mesh with each other. Regardless of this, it can additionally contribute to reliable force transmission and long service life if the coupling toothing of the axle shaft and/or of the input side of the epicyclic gear is circumferential. Alternatively or additionally, it can be constructively simple if one of the coupling toothings is designed as an internal toothing and the other coupling toothing is designed as an external toothing. In this respect, it can be particularly preferred if the coupling toothing of the axle shaft is designed as an external toothing and the coupling toothing of the input side of the epicyclic gear is designed as an internal toothing.

Irrespective of how the epicyclic gear is connected to the wheel fastening element, it can be advantageous if the output side of the epicyclic gear is connected to the input-sided spur wheel of the spur gear in an at least substantially rotationally fixed manner. This can also contribute to a compact and cost-effective design of the gear unit. Then, preferably, no further rotational speed conversion is provided between the output side of the epicyclic gear and the input-sided spur wheel of the spur gear. Alternatively or additionally, the output side of the epicyclic gear can be constructively simply connected to the input-sided spur wheel of the spur gear via an intermediate shaft, so that, preferably, the rotary motion can be transmitted from the epicyclic gear to the spur gear via the intermediate shaft. Irrespective of this and quite generally, the input-sided spur wheel means in particular the spur wheel that is assigned to the wheel fastening element, thus preferably the spur wheel that is connected to the wheel fastening element independently of the at least one other spur wheel of the spur gear.

An easy-to-join connection between the output side of the epicyclic gear and the intermediate shaft is made possible if the intermediate shaft is connected to the output side of the epicyclic gear in a form-fitting manner in circumferential direction. In addition, a form-fitting connection allows for reliable transmission of high torques. For this reason, it can be particularly advantageous if the form-fitting connection is provided by meshing coupling toothings of the output side of the epicyclic gear and of the intermediate shaft. Thus, the coupling toothing of the output side of the epicyclic gear and the coupling toothing of the intermediate shaft can be in mesh with each other. Irrespective of this, the coupling toothing of the output side of the epicyclic gear and/or of the intermediate shaft can be circumferential. This can additionally contribute to reliable force transmission and long service life. Alternatively or additionally, one of the coupling toothings can be an internal toothing and the other coupling toothing can be an external toothing. This can contribute to a simple and cost-effective construction of the gear unit. For this reason, it is particularly preferred if the coupling toothing of the intermediate shaft is an external toothing and the coupling toothing of the output side of the epicyclic gear is an internal toothing.

Irrespective of how the intermediate shaft is connected to the epicyclic gear, it can be advantageous if the intermediate shaft is connected to the input-sided spur wheel of the spur gear in a force-fitting manner in circumferential direction. This has the advantage that the intermediate shaft and the spur wheel are preferably not only connected in circumferential direction but also simultaneously in axial direction, which can have a positive effect on a compact and cost-effective construction of the gear unit. A long service life can be ensured if the force-fitting connection is produced by shrinking the input-sided spur wheel onto the intermediate shaft.

As an alternative or in addition to a force-fitting connection, the intermediate shaft can be connected to the input-sided spur wheel of the spur gear in a form-fitting manner in circumferential direction. Form-fitting connections allow for particularly reliable torque transmission and are easy to join. In particular if a force-fitting connection is provided in addition to the form-fitting connection, it can be advantageous for the sake of simplicity and be sufficient for reliable torque transmission if the form-fitting connection is provided by at least one pin element which is received partly in a pin receptacle of the intermediate shaft and partly in a pin receptacle of the input-sided spur wheel. Then, the form-fitting connection can be joined particularly easily if the pin element extends at least substantially along the rotation axis of the intermediate shaft. Alternatively or additionally, for particularly reliable transmission of high torques, a plurality of respective pin elements can be provided, which can be arranged distributed over the circumference of the intermediate shaft.

It can also contribute to a compact and cost-effective design of the gear unit if the generator coupling element is connected to the output-sided spur wheel of the spur gear in an at least substantially rotationally fixed manner. Then, preferably, there is no further rotational speed conversion provided between the output-sided spur wheel and the generator coupling element. Alternatively or additionally, it can be provided that the generator coupling element is connected to the output-sided spur wheel of the spur gear in a form-fitting manner in circumferential direction. This allows for an easy-to-join connection and, in addition, ensures reliable torque transmission. The form-fitting connection can be a particularly cost-effective feather key connection. On the output side of the gear unit, the torque to be transmitted is preferably significantly reduced compared to the input side of the gear unit, so that a feather key connection can be sufficient for reliable torque transmission. Irrespective of this and quite generally, the output-sided spur wheel of the spur gear means in particular the spur wheel that is assigned to the generator coupling element, thus preferably the spur wheel that is connected to the generator coupling element independently of the at least one other spur wheel of the spur gear.

A particularly compact design of the gear unit can be achieved if a hollow wheel carrier, which at least substantially carries a hollow wheel of the epicyclic gear, is held on a bearing carrier, which carries a bearing, in particular for rotatably supporting a component. In this context, it can be constructively advantageous if the respective bearing rotatably supports the intermediate shaft. Alternatively or additionally, the hollow wheel carrier can be held reliably on the bearing carrier if the hollow wheel carrier is fastened to the bearing carrier, preferably simply and securely by means of one or more screw connections.

With regard to the generator coupling element, it can be advantageous if it comprises a tapering for abutting a drive shaft of the generator in a force-fitting manner. This allows for a centered connection between the generator coupling element and the drive shaft, which has a positive effect on smooth running and reliable operation of the generator. Then, it can be expedient if the drive shaft of the generator, which is designed corresponding to the tapering, abuts the tapering in a force-fitting manner in circumferential direction. Irrespective of this, the tapering can be a conical tapering for the sake of simplicity. Alternatively or additionally, with regard to a simple connection to the drive shaft of the generator, it can also be advantageous if the tapering of the generator coupling element tapers in the direction of the longitudinal end of the generator coupling element that is to be connected to the generator.

Basically regardless of whether the generator coupling element comprises a tapering or not, at least one clamping means can be provided by means of which the generator coupling element can be clamped to a drive shaft of the generator in axial direction. In this way, a force-fitting connection between the generator coupling element and the drive shaft of the generator can be provided simply and quickly. The clamping means can be a clamping screw, which can be simple and cost-effective. For the same reason, it can be alternatively or additionally advantageous if the clamping means extends along the generator rotation axis through the generator coupling element. Then, with regard to simple reliable clamping, it can be additionally advantageous if the clamping means extends at least substantially centrally through the generator coupling element. Irrespective of this, it can be expedient if the generator coupling element is clamped to the drive shaft of the generator by means of the clamping means such that the drive shaft abuts the tapering of the generator coupling element in a force-fitting manner in circumferential direction.

With regard to a simple constructional design of the utility vehicle axle and at the same time a simple connection of the generator to the generator coupling element, it can be advantageous if the wheel rotation axis and the generator rotation axis are arranged at least substantially parallel to each other. Against the same background, it can be alternatively or additionally advantageous if the wheel rotation axis and the generator rotation axis are arranged spaced apart from each other.

Regardless of how the wheel rotation axis and the generator rotation axis are oriented to each other, it can be provided that the wheel rotation axis, the rotation axis of the input side of the epicyclic gear, the rotation axis of the output side of the epicyclic gear and/or the rotation axis of the input-sided spur wheel of the spur gear are arranged at least substantially on a common axis. Then, preferably, at least two of said components are rotatable about at least substantially the same rotation axis. This can contribute to a simple and compact construction of the utility vehicle axle. For the same reason, it can alternatively or additionally also be advantageous if the generator rotation axis and the rotation axis of the output-sided spur wheel of the spur gear are arranged at least substantially on a common axis.

A compact design of the generator and yet high electrical output power of the generator can be made possible if the gear ratio of the gear unit of the rotational speed of the wheel fastening element to the rotational speed of the generator coupling element is at most 0.2. For the same reason, it can be even more preferred if the respective gear ratio is at most 0.15, preferably at most 0.1. Regardless of a respective upper limit, it can be provided that the gear ratio of the gear unit of the rotational speed of the wheel fastening element to the rotational speed of the generator coupling element is at least 0.02. In this way, it can be prevented that excessively high rotational speeds occur, in particular at the output side of the gear unit assigned to the generator coupling element, which has a negative effect on the service life of the components involved. Therefore, it is particularly preferred if the respective gear ratio is at least 0.04, preferably at least 0.05.

It is expedient if the utility vehicle axle comprises two wheel fastening elements which serve to fasten wheels on opposite longitudinal sides of the utility vehicle. Then, it can be further provided that only one of the two wheel fastening elements is connected to the generator coupling element for driving the generator coupling element. Thus, the generator coupling element can preferably be driven by only one of the two wheel fastening elements. This allows for a significantly simplified construction of the gear unit and consequently a significant reduction in manufacturing costs. Due to the high forces and torques typically acting in the area of utility vehicle wheels, sufficient output power of the generator can nevertheless be ensured.

Regardless of whether only one of the two wheel fastening elements is connected to the generator coupling element or both, it can be advantageous if the gear unit is arranged, preferably at least substantially centrally, between the two wheel fastening elements. This can contribute to an even weight distribution. Alternatively or additionally, it can be provided that the distance of the gear unit from each of the wheel fastening elements is at least one fifth of the distance of the wheel fastening elements from each other. In this way, a compact and cost-effective gear unit is made possible. This applies all the more if the distance of the gear unit from each of the wheel fastening elements is at least one quarter, preferably at least one third, of the distance of the wheel fastening elements from one another.

In order to simply ensure reliable operation of the epicyclic gear, a bearing rotatably supporting the planet carrier of the epicyclic gear can be provided. The bearing rotatably supporting the planet carrier can simply and expediently be designed as a ball bearing. Regardless of the mounting of the planet carrier, a simple yet reliable mounting of the intermediate shaft can be achieved if two bearings rotatably supporting the intermediate shaft are provided, which are arranged on opposite sides of the input-sided spur wheel of the spur gear. Alternatively or additionally, it can be advantageous in terms of reliable mounting of the generator coupling element if at least two bearings rotatably supporting the generator coupling element are provided, which are arranged on opposite sides of the output-sided spur wheel of the spur gear. The bearings rotatably supporting the intermediate shaft and/or the bearings rotatably supporting the generator coupling element can expediently be designed as tapered roller bearings.

According to a preferred embodiment of the utility vehicle, the utility vehicle comprises an energy storage connected to the generator for storing electrical energy provided by the generator. In this way, the electrical energy provided by the generator can be temporarily stored, for example in phases in which the generator provides more electrical energy than required. This allows for reliable and efficient operation of the utility vehicle. The energy storage can simply and expediently be designed as an accumulator.

As an alternative or in addition to an energy storage, the utility vehicle can comprise a transport refrigeration unit for tempering, thus preferably cooling and/or heating, a loading space of the utility vehicle. Then, the transport refrigeration unit, for supply with electrical energy, can be connected to the generator and/or, if the energy storage is provided, to the energy storage. In many utility vehicles, the transport refrigeration unit is one of the main consumers of electrical energy, so that the advantages described above take particular effect.

The invention will be explained in more detail below on the basis of a drawing merely illustrating an exemplary embodiment. In the drawing,
- Fig. 1: shows a utility vehicle according to the invention in a schematic perspective view,
- Fig. 2: shows a utility vehicle axle according to the invention of the utility vehicle from Fig. 1 in a schematic perspective, partially sectional view,
- Figs. 3A-B: show a detail of the utility vehicle axle from Fig. 2 in a schematic perspective sectional view and in a schematic longitudinal sectional view,
- Figs. 4A-B: show the utility vehicle axle from Figs. 3A-B in two different schematic cross sectional views and
- Figs. 5A-B: show a detail of the utility vehicle axle from Figs. 3A-B in a schematic longitudinal sectional view and in a schematic cross sectional view.

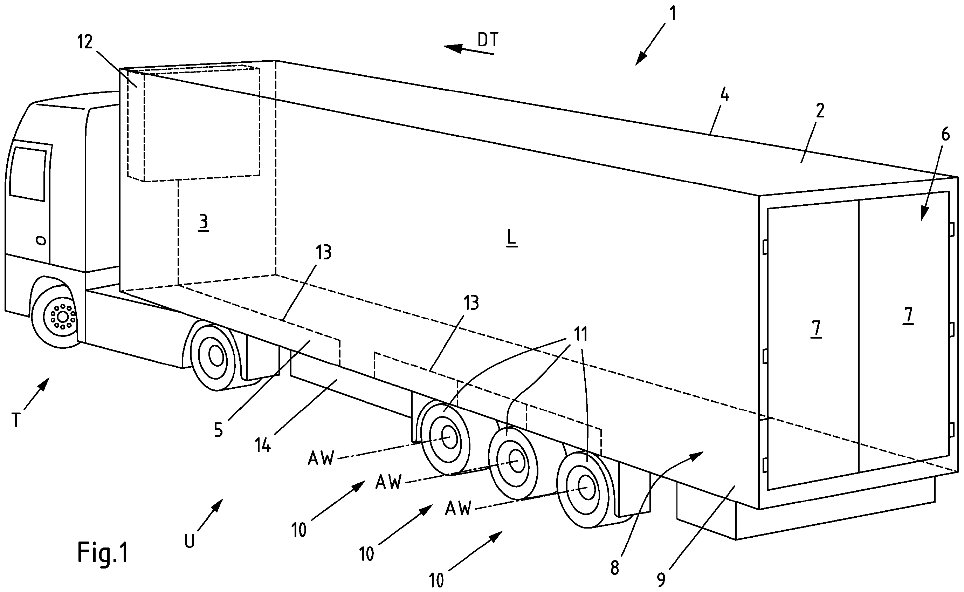

In Fig. 1, a utility vehicle U in the form of a semitrailer comprising a utility vehicle body in the form of a box body 1 is illustrated in a perspective view, wherein the utility vehicle U is towed by a tractor T. The box body 1 comprises a solid roof 2, a solid front wall 3, two solid side walls 4,5 and a solid rear wall 6, which is substantially formed by two wing doors 7. In addition, the box body 1 comprises a loading space 8, which is delimited in downward direction by a floor 9 on which cargo can be placed. Besides the box body 1, the utility vehicle U comprises in the present case three utility vehicle axles 10 arranged one behind the other. To each of the utility vehicle axles 10, two wheels 11 are fastened rotatably about a wheel rotation axis AW on the opposite longitudinal sides of the utility vehicle U.

On the front wall 3 of the box body 1, a transport refrigeration unit 12 is mounted, which is arranged predominantly outside the loading space 8. The transport refrigeration unit 12 sucks in the atmosphere contained in the loading space 8, which consists of air in the present case, and tempers the sucked-in air to a desired temperature. Subsequently, the tempered air is blown back into the loading space 8. In this way, the loading space 8 is tempered.

In order to supply the transport refrigeration unit 12 with electrical energy, the transport refrigeration unit 12 is connected via an electrical line 13 to an electrical energy storage 14 in the form of an accumulator. The electrical energy storage 14, in turn, is connected via electrical lines 13 to three generators 15 not illustrated in Fig. 1, each of which is mounted on one of the three utility vehicle axles 10.

The generators 15 convert a part of the rotational energy, which is introduced into the wheels 11 arranged on the right in the direction of travel DT while the utility vehicle U is moving, into electrical energy. This electrical energy is then temporarily stored in the electrical energy storage 14 and, subsequently, provided to the transport refrigeration unit 12. Alternatively or additionally, the electrical energy could also be provided to other electrical components of the utility vehicle U, such as a telematics device for communication with a center remote from the utility vehicle U or a lighting device for illuminating the loading space 8. Irrespective of this, the transport refrigeration unit 12 could alternatively or additionally also be connected directly to the generators 15, so that the electrical energy provided by the generators 15 can be provided to the transport refrigeration unit 12 without being temporarily stored in the electrical energy storage 14.

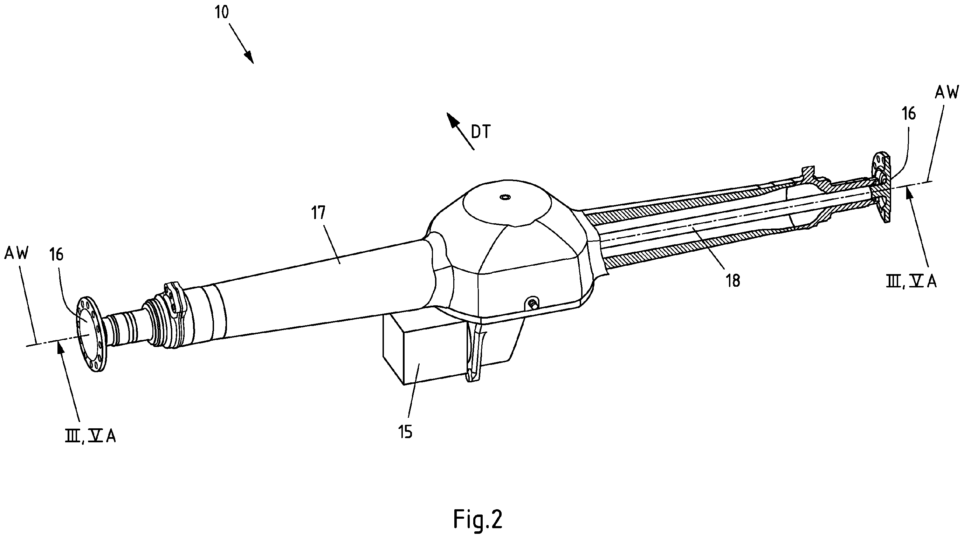

In Fig. 2, one of the utility vehicle axles 10, which are of similar design in the present case, is illustrated in a perspective, partially sectional view. At each of the utility vehicle axle's opposite longitudinal ends, the utility vehicle axle 10 comprises a wheel fastening element 16, to which a wheel 11 of the utility vehicle U can be fastened, for example via a wheel flange. The wheel fastening elements 16 are supported rotatably about the wheel rotation axis AW in a manner not illustrated. An axle body 17 of the utility vehicle axle 10, in which further components of the utility vehicle axle 10 are received, extends between the wheel fastening elements 16. In addition, the generator 15 of the utility vehicle axle 10 is fastened to the axle body 17.

The wheel fastening element 16 arranged on the right in the direction of travel DT is welded to an axle shaft 18, which extends from the wheel fastening element 16 to the center of the utility vehicle axle 10. The welded connection between the wheel fastening element 16 and the axle shaft 18 is produced by friction welding. The wheel fastening element 16 is connected to the generator 15 via the axle shaft 18, so that the rotary motion of the wheel fastening element 16 can be transmitted to the generator 15 via the axle shaft 18.

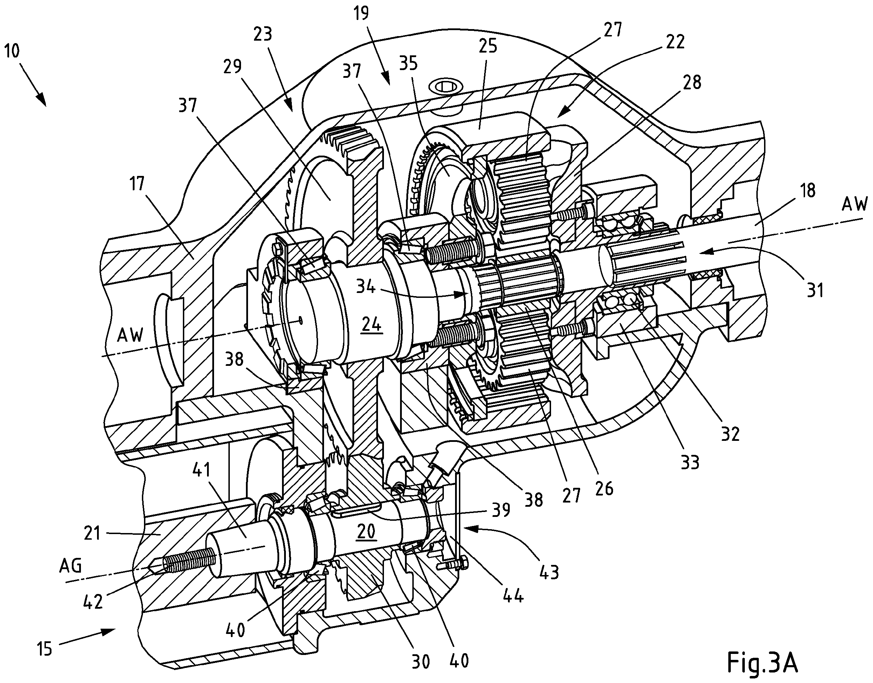

In Figs. 3A-B, a detail of the utility vehicle axle 10 is illustrated in a sectional perspective view and in a sectional view along the sectional plane III-III illustrated in Fig. 2. At the longitudinal end facing away from the wheel fastening element 16, the axle shaft 18 is connected to a gear unit 19 and, in this way, introduces the rotary motion into the gear unit 19. The gear unit 19 in turn transmits the rotary motion to a generator coupling element 20 supported rotatably about a generator rotation axis AG. The generator coupling element 20 finally transmits the rotary motion to a drive shaft 21 of the generator 15, whereby the generator 15 is driven.

In the present case, the gear unit 19 comprises a straight-toothed epicyclic gear 22 and a helical-toothed spur gear 23 following the epicyclic gear 22. The epicyclic gear 22 and the spur gear 23 are connected to each other via an intermediate shaft 24. The epicyclic gear 22 comprises a hollow wheel 25, a sun wheel 26 arranged centrally of the hollow wheel 25, three planetary wheels 27 each meshing with the hollow wheel 25 and the sun wheel 26, and a planet carrier 28 on which the planetary wheels 27 are held rotatably. The spur gear 23 comprises two meshing spur wheels 29, 30. Thus, both the epicyclic gear 22 and the spur gear 23 are of a single-stage design in the present case.

The axle shaft 18 rotating about the wheel rotation axis AW drives the planet carrier 28 of the epicyclic gear 22, which in the present case consists of two parts bolted together. For this purpose, the axle shaft 18 is connected to the planet carrier 28 in a form-fitting manner in circumferential direction. The form-fit is provided by meshing coupling toothings 31 of the axle shaft 18 and the planet carrier 28. The coupling toothing 31 of the axle shaft 18 is designed as a circumferential external toothing and the coupling toothing 31 of the planet carrier 28 is designed as a circumferential internal toothing, wherein, for the sake of a better overview, only some of the teeth of the coupling toothing 31 of the axle shaft 18 are illustrated in Fig. 3A. The planet carrier 28 is supported rotatably about the wheel rotation axis AW by means of a bearing 32 which is designed as a double-row ball bearing. The bearing 32 is carried by a bearing carrier 33, which supports the bearing 32 on the axle body 17.

As a result of the rotation of the planet carrier 28 about the wheel rotation axis AW, the planetary wheels 27 rotatably held by the planet carrier 28 are moved on a circular path about the wheel rotation axis AW. Thereby, the sun wheel 26 is driven, which thus also rotates about the wheel rotation axis AW. The sun wheel 26 in turn drives the intermediate shaft 24. For this purpose, the intermediate shaft 24 is connected to the sun wheel 26 in a form-fitting manner in circumferential direction by means of meshing coupling toothings 34 of the intermediate shaft 24 and of the sun wheel 26. In the present case, the coupling toothing 34 of the intermediate shaft 24 is designed as a circumferential external toothing and the coupling toothing 34 of the sun wheel 26 is designed as a circumferential internal toothing, wherein, for the sake of a better overview, only some of the teeth of the coupling toothing 34 of the intermediate shaft 24 are illustrated in Fig. 3A.

In the illustrated and insofar preferred embodiment, thus, the planet carrier 28 forms the input side of the epicyclic gear 22 assigned to the wheel fastening element 16 and the sun wheel 26 forms the output side of the epicyclic gear 22 assigned to the generator coupling element 20. The hollow wheel 25 of the epicyclic wheel 22 is stationary in circumferential direction. For this purpose, the hollow wheel 25 is fixed in circumferential direction to a hollow wheel carrier 35, which at least partially carries the hollow wheel 25.

The intermediate shaft 24 transmits the rotary motion from the sun wheel 26, which forms the output side of the epicyclic gear 22, to the input-sided spur wheel 29 of the spur gear 23, which is assigned to the wheel fastening element 16. As a consequence, the input-sided spur wheel 29 also rotates about the wheel rotation axis AW. For torque transmission, the input-sided spur wheel 29 is shrunk onto the intermediate shaft 24 in the present case. In addition, the intermediate shaft 24 is connected to the input-sided spur wheel 29 in a form-fitting manner in circumferential direction by means of a plurality of pin elements 36 extending along the wheel rotation axis AW.

For rotatably supporting the intermediate shaft 24, two bearings 37 in the form of tapered roller bearings are provided, which are arranged on opposite sides of the input-sided spur wheel 29. The bearings 37 are each carried by a bearing carrier 38, which supports the respective bearing 37 on the axle body 17. In the illustrated and insofar preferred embodiment, the hollow wheel carrier 35, which at least substantially carries the hollow wheel 25 of the epicyclic gear 22, is held on the bearing carrier 38 arranged between the spur gear 23 and the epicyclic gear 22. For this purpose, the hollow wheel carrier 35 is fastened to the respective bearing carrier 38 by means of a plurality of screw connections.

The input-sided spur wheel 29 is in mesh with the output-sided spur wheel 30 of the spur gear 23 assigned to the generator coupling element 20 and thus drives the output-sided spur wheel 30. The output-sided spur wheel 30, which rotates about the generator rotation axis AG, in turn drives the generator coupling element 20. For this purpose, the generator coupling element 20 is connected to the output-sided spur wheel 30 in a form-fitting manner in circumferential direction by means of a feather key 39. Two bearings 40, in the present case in the form of tapered roller bearings, are provided on opposite sides of the output-sided spur wheel 30 for rotatably supporting the generator coupling element 20 about the generator rotation axis AG.

The generator coupling element 20 finally drives the drive shaft 21 of the generator 15. For this purpose, the drive shaft 21 is pushed onto the longitudinal end of the generator coupling element 20, which is designed as a conical tapering 41, and is clamped in axial direction to the generator coupling element 20 by means of a clamping means 42, which is designed as a clamping screw in the present case. In this way, the drive shaft 21 abuts the tapering 41 of the generator coupling element 20 in a force-fitting manner in circumferential direction. The clamping means 42 extends along the generator rotation axis AG centrally through the generator coupling element 20. In this way, the clamping means 42 can be actuated via an opening 43 in the axle body 17, which is closed by means of a removable cover 44.

The gear unit 19 thus converts the rotational speed of the wheel fastening element 16 into the rotational speed of the generator coupling element 20. In the course of this, the epicyclic gear 22 converts the rotational speed of the planet carrier 28, which in the present case is the input rotational speed of the epicyclic gear 22 and is equal to the rotational speed of the wheel fastening element 16, into a higher rotational speed of the sun wheel 26, which in the present case is the output rotational speed of the epicyclic gear 22. The gear ratio of the epicyclic gear 22 of input rotational speed to output rotational speed is approximately 0.185. The spur gear 23, in turn, converts the rotational speed of the input-sided spur wheel 29, hence the input rotational speed of the spur gear 23, which is equal to the rotational speed of the sun wheel 26 of the epicyclic gear 22 in the present case, into a higher rotational speed of the output-sided spur wheel 30, hence the output rotational speed of the spur gear 23, which is equal to the rotational speed of the generator coupling element 20 in the present case. The gear ratio of the spur gear 23 of input rotational speed to output rotational speed is approximately 0.418. Thus, the gear ratio of the gear unit 19 is approximately 0.0774 in total.

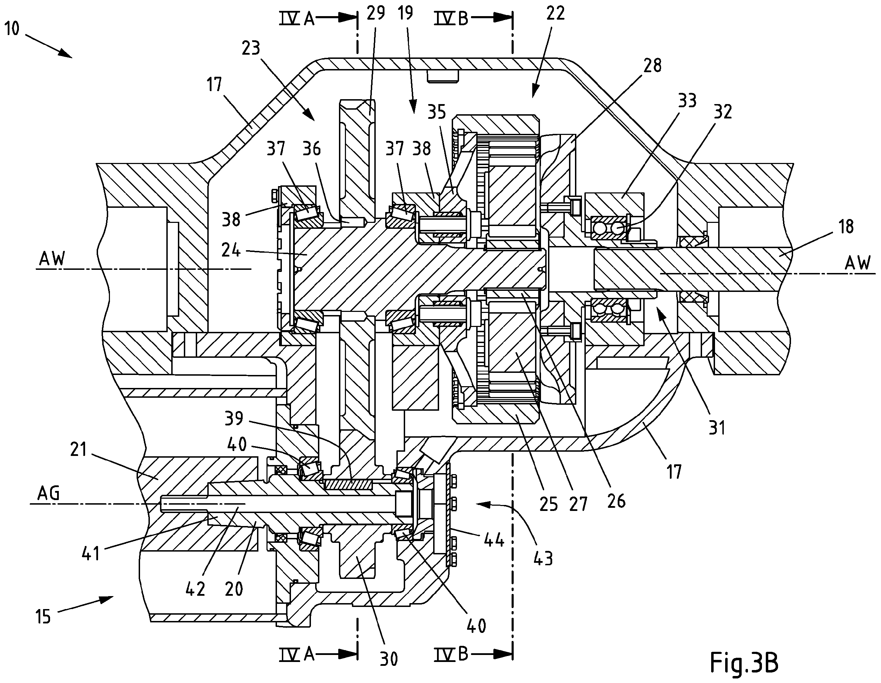

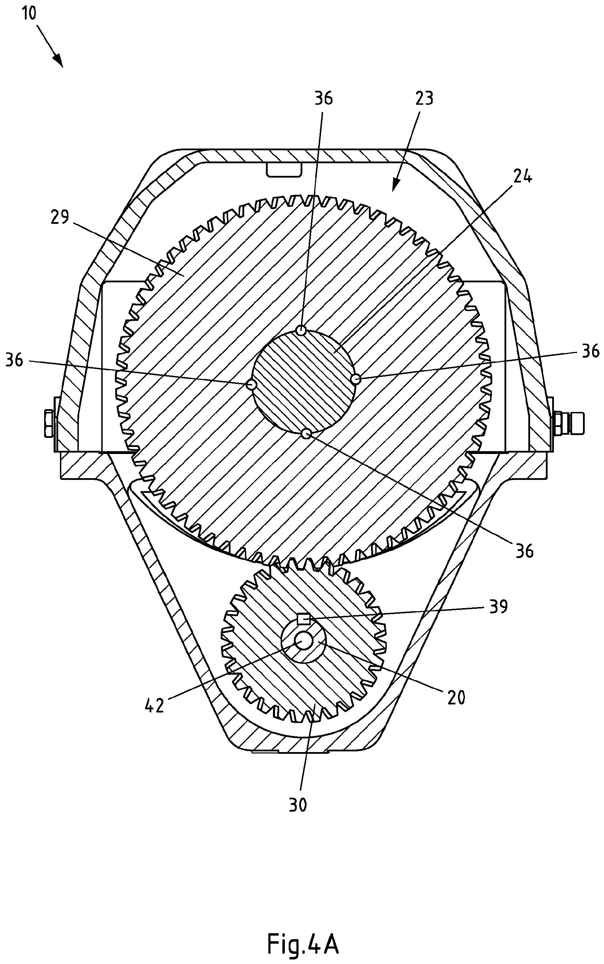

In Fig. 4A, the utility vehicle axle 10 is illustrated in a sectional view along the sectional plane IVA-IVA illustrated in Fig. 3B in the area of the spur gear 23. The input-sided spur wheel 29 of the spur gear 23 is connected to the intermediate shaft 24 in a form-fitting manner in circumferential direction by means of the pin elements 36, which in the present case have a circular cross section. For this purpose, the pin elements 36 each engage with a correspondingly designed pin receptacle of the intermediate shaft 24 and a correspondingly designed pin receptacle of the input-sided spur wheel 29 in a form-fitting manner. In the illustrated and insofar preferred embodiment, four pin elements 36 are provided, which are arranged distributed over the circumference of the intermediate shaft 24. The input-sided spur wheel 29 is in mesh with the output-sided spur wheel 30. The output-sided spur wheel 30 is connected to the generator coupling element 20 in a form-fitting manner in circumferential direction by means of the feather key 39, which has a rectangular cross section in the present case.

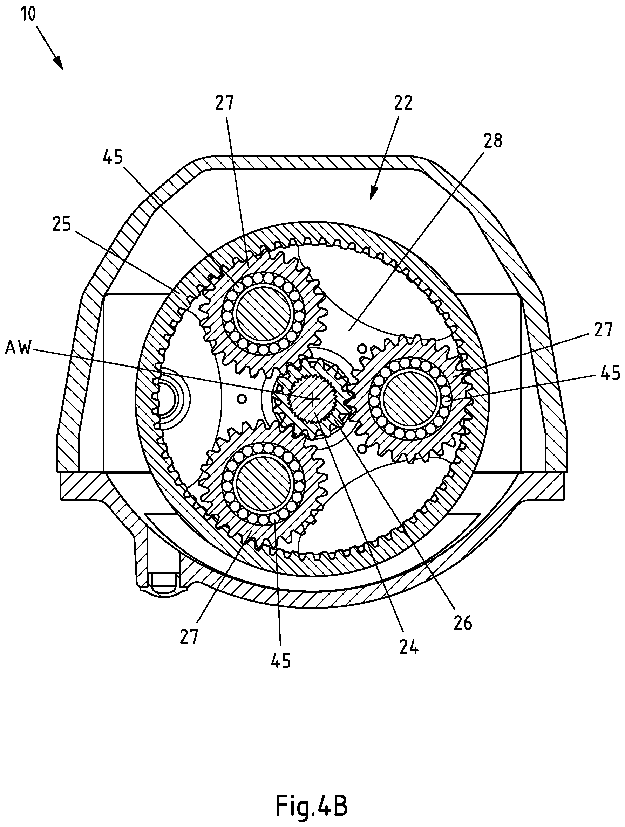

In Fig. 4B, the utility vehicle axle 10 is illustrated in a sectional view along the sectional plane IVB-IVB illustrated in Fig. 3B in the area of the epicyclic gear 22. The planetary wheels 27 each are in mesh with the hollow wheel 25 and the sun wheel 26. The planetary wheels 27 are each held rotatably on the planet carrier 28 via ball bearings 45. In this way, the planetary wheels 27 can rotate about their axis while being moved in a circular path about the wheel rotation axis AW around the sun wheel 26 by the rotation of the planet carrier 28.

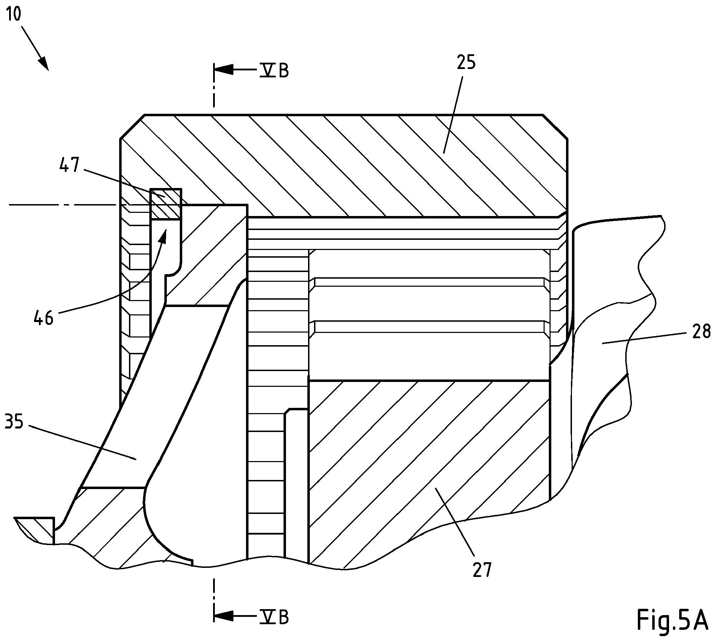

In Fig. 5A, a detail of the utility vehicle axle 10 is illustrated in a sectional view along the sectional plane VA-VA illustrated in Fig. 2 in the connection area between the hollow wheel 25 and the hollow wheel carrier 35. The hollow wheel 25 is pushed onto the hollow wheel carrier 35 in axial direction and abuts the hollow wheel carrier 35 in axial direction. A retaining ring 47 is provided, which engages with a circumferential groove 46 of the hollow wheel 25 in a form-fitting manner and secures the hollow wheel 25 against slipping off the hollow wheel carrier 35.

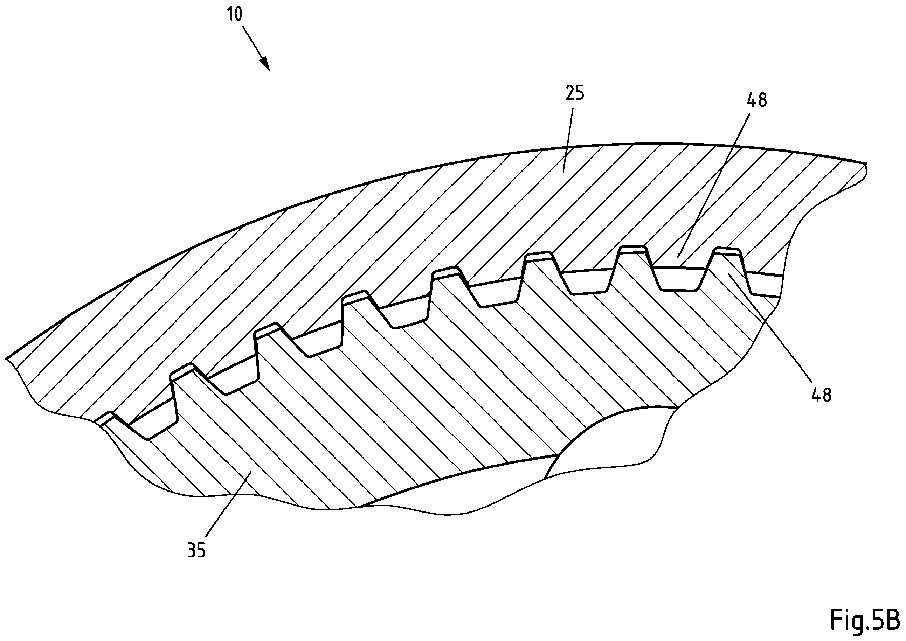

In Fig. 5B, a detail of the utility vehicle axle 10 is illustrated in a sectional view along the sectional plane VB-VB illustrated in Fig. 5A in the connection area between the hollow wheel 25 and the hollow wheel carrier 35. The hollow wheel 25 and the hollow wheel carrier 35 comprise correspondingly designed fixing toothings 48 that are in mesh with each other. The fixing toothing 48 of the hollow wheel 25 is designed as a circumferential internal toothing and the fixing toothing 48 of the hollow wheel carrier 35 is designed as a circumferential external toothing. In this way, the hollow wheel 25 is fixed to the stationary hollow wheel carrier 35 in a form-fitting manner in circumferential direction.

### List of reference numerals

- 1: box body
- 2: roof
- 3: front wall
- 4,5: side wall
- 6: rear wall
- 7: wing door
- 8: loading space
- 9: floor
- 10: utility vehicle axle
- 11: wheel
- 12: transport refrigeration unit
- 13: electrical line
- 14: energy storage
- 15: generator
- 16: wheel fastening element
- 17: axle body
- 18: axle shaft
- 19: gear unit
- 20: generator coupling element
- 21: drive shaft
- 22: epicyclic gear
- 23: spur gear
- 24: intermediate shaft
- 25: hollow wheel
- 26: sun wheel
- 27: planetary wheel
- 28: planet carrier
- 29: input-sided spur wheel
- 30: output-sided spur wheel
- 31: coupling toothing
- 32: bearing
- 33: bearing carrier
- 34: coupling toothing
- 35: hollow wheel carrier
- 36: pin element
- 37: bearing
- 38: bearing carrier
- 39: feather key
- 40: bearing
- 41: tapering
- 42: clamping means
- 43: opening
- 44: cover
- 45: ball bearing
- 46: groove
- 47: retaining ring
- 48: fixing toothing

- AW: wheel rotation axis
- AG: generator rotation axis
- DT: direction of travel
- U: utility vehicle
- T: tractor

## Claims

1. Utility vehicle axle (10) for a utility vehicle (U), in particular a truck, trailer or semitrailer, comprising at least one wheel fastening element (16) for fastening at least one wheel (11) of the utility vehicle (U) to the utility vehicle axle (10) and a generator coupling element (20) for connecting to a generator (15) and driving the generator (15), wherein the wheel fastening element (16) is rotatable about a wheel rotation axis (AW), wherein the generator coupling element (20) is rotatable about a generator rotation axis (AG) and wherein the wheel fastening element (16), for driving the generator coupling element (20), is connected to the generator coupling element (20) via a gear unit (19) for converting the rotational speed of the wheel fastening element (16) into a higher rotational speed of the generator coupling element (20).

2. Utility vehicle axle according to claim 1,
**characterized in that**
the gear unit (19) comprises a, in particular single-stage and/or straight-toothed, epicyclic gear (22) for converting an input rotational speed assigned to the wheel fastening element (16) into a higher output rotational speed assigned to the generator coupling element (20) and **in that**, preferably, the gear ratio of the epicyclic gear (22) of input rotational speed to output rotational speed is at most 0.6, preferably at most 0.4, in particular at most 0.2, and/or at least 0.05, preferably at least 0.1, in particular at least 0.15.

3. Utility vehicle axle according to claim 2,
**characterized in that**
a planet carrier (28) of the epicyclic gear (22) forms the input side or the output side of the epicyclic gear (22) and/or **in that** a sun wheel (26) of the epicyclic gear (22) forms the output side or the input side of the epicyclic gear (22) and/or **in that** a hollow wheel (25) of the epicyclic gear (22) is fixed in circumferential direction, in particular in a form-fitting manner and/or to a hollow wheel carrier (35) at least substantially carrying the hollow wheel (25).

4. Utility vehicle axle according to any one of claims 1 to 3, **characterized in that**
the gear unit (19) comprises a, in particular single-stage and/or helical-toothed, spur gear (23) for converting an input rotational speed assigned to the wheel fastening element (16) into an, in particular higher, output rotational speed assigned to the generator coupling element (20) and **in that**, preferably, the gear ratio of the spur gear (23) of input rotational speed to output rotational speed is at most 0.8, preferably at most 0.6, in particular at most 0.45, and/or at least 0.1, preferably at least 0.25, in particular at least 0.35.

5. Utility vehicle axle according to claim 4,
**characterized in that**
the wheel fastening element (16) is connected to the spur gear (23) via the epicyclic gear (22) and/or **in that** the epicyclic gear (22) is connected to the generator coupling element (20) via the spur gear (23).

6. Utility vehicle axle according to any one of claims 2 to 5, **characterized in that**
the wheel fastening element (16) is connected to the input side of the epicyclic gear (22) in an at least substantially rotationally fixed manner and/or via an axle shaft (18) and **in that**, preferably, the axle shaft (18) is connected to the wheel fastening element (16) in a materially bonded manner and/or is connected to the input side of the epicyclic gear (22) in a form-fitting manner in circumferential direction.

7. Utility vehicle axle according to any one of claims 4 to 6, **characterized in that**
the output side of the epicyclic gear (22) is connected to the input-sided spur wheel (29) of the spur gear (29) in an at least substantially rotationally fixed manner and/or via an intermediate shaft (24) and **in that**, preferably, the intermediate shaft (24) is connected to the output side of the epicyclic gear (22) in a form-fitting manner in circumferential direction and/or is connected to the input-sided spur wheel (29) of the spur gear (23) in a form-fitting and/or force-fitting manner in circumferential direction.

8. Utility vehicle axle according to any one of claims 4 to 7, **characterized in that**
the generator coupling element (20) is connected to the output-sided spur wheel (30) of the spur gear (23) in an at least substantially rotationally fixed manner and/or in a form-fitting manner in circumferential direction.

9. Utility vehicle axle according to any one of claims 2 to 8, **characterized in that**
a hollow wheel carrier (35) at least substantially carrying a hollow wheel (25) of the epicyclic gear (22) is held on a bearing carrier (38) carrying a bearing (37) and **in that**, preferably, the bearing (37) rotatably supports the intermediate shaft (24).

10. Utility vehicle axle according to any one of claims 1 to 9, **characterized in that**
the generator coupling element (20) comprises a, in particular conical, tapering (41) for abutting a drive shaft (21) of the generator (15) in a force-fitting manner and, preferably, the drive shaft (21) of the generator (15) designed corresponding to the tapering (41) abuts the tapering (41) in a force-fitting manner in circumferential direction and/or **in that** at least one clamping means (42), in particular in the form of a clamping screw, for clamping the generator coupling element (20) to a drive shaft (21) of the generator (15) in axial direction is provided and, preferably, the clamping means (42) extends along the generator rotation axis (AG), in particular centrally, through the generator coupling element (20).

11. Utility vehicle axle according to any one of claims 1 to 10, **characterized in that**
the wheel rotation axis (AW) and the generator rotation axis (AG) are arranged at least substantially parallel to each other and/or spaced apart from each other and/or **in that** the wheel rotation axis (AW), the rotation axis of the input side of the epicyclic gear (22), the rotation axis of the output side of the epicyclic gear (22) and/or the rotation axis of the input-sided spur wheel (29) of the spur gear (23) are arranged at least substantially on a common axis and/or **in that** the generator rotation axis (AG) and the rotation axis of the output-sided spur wheel (30) of the spur gear (23) are arranged at least substantially on a common axis.

12. Utility vehicle axle according to any one of claims 1 to 11, **characterized in that**
the gear ratio of the gear unit (19) of the rotational speed of the wheel fastening element (16) to the rotational speed of the generator coupling element (20) is at most 0.2, preferably at most 0.15, in particular at most 0.1, and/or at least 0.02, preferably at least 0.04, in particular at least 0.05.

13. Utility vehicle axle according to any one of claims 1 to 12, **characterized in that**
two wheel fastening elements (16) for fastening wheels (11) on opposite longitudinal sides of the utility vehicle (N) are provided and **in that**, preferably, only one of the wheel fastening elements (16) is connected to the generator coupling element (20) for driving the generator coupling element (20) and/or the gear unit (19) is arranged, in particular at least substantially centrally, between the wheel fastening elements (16) and/or the distance of the gear unit (19) from each of the wheel fastening elements (16) is at least one fifth, preferably at least one quarter, in particular at least one third, of the distance of the wheel fastening elements (16) from one another.

14. Utility vehicle axle according to any one of claims 2 to 13, **characterized in that**
a bearing (32) rotatably supporting the planet carrier (28) of the epicyclic gear (22) is provided and/or **in that** two bearings (37) rotatably supporting the intermediate shaft (24) are provided on opposite sides of the input-sided spur wheel (29) of the spur gear (23) and/or **in that** two bearings (40) rotatably supporting the generator coupling element (20) are provided on opposite sides of the output-sided spur wheel (30) of the spur gear (23).

15. Utility vehicle (U), in particular truck, trailer or semitrailer, comprising at least one utility vehicle axle (10),
**characterized in that**
the utility vehicle axle (10) is designed according to any one of claims 1 to 14.
